# FASCICULE DE BREVET EUROPEEN

(11) **EP 1 447 525 B1**
(45) Date de publication et mention de la délivrance du brevet: **09.05.2007**
(21) Numéro de dépôt: 04290395.5
(22) Date de dépôt: 13.02.2004
(51) Int. Cl.: F01D 5/16, F01D 5/22, F01D 5/26

(54) **Réalisation de turbines pour turbomachines ayant des aubes à fréquences de résonance ajustées différentes et une telle turbine étagée**
Verfahren zur Herstellung einer Turbine mit Turbinenschaufeln unterschiedlicher Resonanzfrequenzen samt einer solchen Turbine
Method for producing turbines having turbine blades of different adjusted resonant frequencies and a corresponding turbine

(30) Priorité: 13.02.2003 FR 0301715
(43) Date de publication de la demande: 18.08.2004
(73) Titulaire: SNECMA, 75015 Paris (FR)
(72) Inventeur: Balleron, Charles, 78500 Sartrouville (FR); Bion, Claude, 95230 Saint Leu La Foret (FR); Girard, Patrick, 77000 Melun (FR); Lescure, Xavier, 77300 Fontaineblau (FR); Lopez, José, 94230 Cachan (FR); Popinet, Henri, 92600 Asnieres (FR); Rosset, Patrice, 77350 Le Mee sur Seine (FR); Rossi, Patrick, 92600 Asnieres sur Seine (FR); Soupizon, Jean-Luc, 77000 Vaux le Penil (FR); Tourbier, Sandrine, 92500 Rueil Malmaison (FR)
(74) Mandataire: Joly, Jean-Jacques

(56) Documents cités:
- EP-A- 1 211 382
- FR-A- 1 578 562
- FR-A- 2 568 308
- FR-A- 2 712 631
- US-A- 4 460 316
- US-A- 5 474 421

## Description

### Arrière-plan de l'invention

L'invention se rapporte aux turbomachines, notamment aux turbines aéronautiques et aux turbines à gaz industrielles. Plus particulièrement, l'invention concerne les turbines de telles turbomachines et, plus précisément encore, l'ajustement de la fréquence de résonance des aubes de turbines.

Habituellement, les aubes de turbines comprennent une pale reliée à une plate-forme externe et à une plate-forme interne qui se prolonge par un pied pour la fixation de l'aube au rotor de turbine.

Il est important d'éviter l'apparition de vibrations indésirables dans les turbines de turbomachine, et notamment de vibrations causées par des phénomènes de résonance, pour les différents régimes de fonctionnement de la turbomachine.

Or, compte tenu des contraintes en termes de respect du profil aérodynamique de la pale et de masse et encombrement, les possibilités d'ajustement de la fréquence de résonance des aubes en jouant sur leur géométrie sont limitées.

Ainsi, il a été proposé dans le document FR 1 578 562 de conférer aux aubes monopales d'une roue des caractéristiques différentes telles que des longueurs différentes des pieds d'aubes en direction radiale ou des dimensions différentes au niveau des attaches des aubes sur le rotor. Toutefois, de telles solutions sont pénalisantes en terme de masse des aubes ou de complexité de réalisation du rotor ou des attaches des aubes sur le rotor.

Le document US-A-5 474 421 divulgue un groupage de pales correspondant à des préambules des revendications 1 et 6.

### Objet et résumé de l'invention

L'invention a pour but de proposer un procédé de réalisation d'une turbine pour turbomachine permettant de prévenir l'apparition de vibrations indésirables.

L'invention a aussi pour but de proposer un procédé offrant une grande latitude d'ajustement de la fréquence de résonance d'une aube de turbine, sans pénaliser celle-ci du point de vue de ses caractéristiques aérodynamiques et de sa masse et sans introduire de complication de montage des aubes ou de réalisation du rotor.

L'invention a encore pour but de proposer une turbine pour turbomachine présentant un risque fortement diminué d'apparition de vibrations indésirables, sans dégradation de ses performances.

Selon un premier aspect, l'invention a pour objet un procédé pour la réalisation d'une turbine pour turbomachine, la turbine comprenant au moins une roue mobile munie d'aubes, procédé selon lequel on utilise pour la ou chaque roue mobile des aubes comportant chacune au moins deux pales réunies à une plate-forme externe, une plate-forme interne et un pied communs, certaines au moins des aubes ayant un pied creux dans lequel est formé un évidemment, et on confère volontairement aux pieds d'aubes appartenant à une même roue et/ou aux pieds d'aubes appartenant à deux roues différentes des configurations différentes au niveau d'évidements de leurs pieds pour ajuster les fréquences de résonance propres de ces aubes à des valeurs sensiblement différentes et réaliser ainsi un désaccordage entre aubes d'une même roue et/ou de deux roues différentes.

L'utilisation d'un pied commun à plusieurs pales offre une meilleure possibilité de jouer sur la configuration d'un évidement du pied pour ajuster la fréquence de résonance d'une aube, en comparaison avec une roue formée traditionnellement d'aubes monopales.

On peut donc ainsi réaliser plus aisément un désaccordage entre fréquences de résonance d'aubes d'une même roue mobile ou entre fréquences de résonance d'aubes appartenant à des roues mobiles différentes, ce qui réduit les risques d'apparition de vibration.

Selon un autre de ses aspects, l'invention a pour objet un procédé d'ajustement de la fréquence de résonance d'une aube mobile de turbine pour turbomachine, procédé dans lequel on réalise l'aube avec au moins deux pales réunies avec une plate-forme interne, une plate-forme externe et un pied communs et on ajuste la fréquence de résonance propre de l'aube en formant un évidement dans le pied de l'aube.

On peut notamment réaliser l'aube avec un pied en forme de bulbe et on ajuste la fréquence de résonance par action sur l'épaisseur de matière, de part et d'autre de l'évidement, au niveau d'une partie du pied en forme de col.

Avantageusement, dans le cas d'une aube de turbine destinée à une turbomachine ayant un compresseur haute-pression (HP) et un compresseur basse-pression (BP), la fréquence de résonance de l'aube est ajustée à une valeur supérieure de plus de 14 % au mode d'excitation correspondant à N₂ ― N₁ où N₂ et N₁ sont les vitesses de rotation des compresseurs HP et BP.

Selon encore un autre aspect de l'invention, celle-ci a pour objet une turbine étagée pour turbomachine, laquelle turbine comprend au moins une roue mobile munie d'aubes qui comportent chacune au moins deux pales réunies à une plate-forme externe, une plate-forme interne et un pied communs, turbine dans laquelle certaines au moins des aubes d'une roue mobile et/ou de roues mobiles différentes ont un pied creux dans lequel est formé un évidemment et présentent des configurations différentes au niveau de leurs évidements telles que ces aubes ont des fréquences de résonance sensiblement différentes.

L'évidement formé dans un pied d'aube peut s'ouvrir sur un côté au moins du pied et peut être borgne.

Certaines des aubes peuvent avoir un pied plein dépourvu d'évidement.

### Brève description des dessins

L'invention sera mieux comprise à la lecture de la description faite ci-après, à titre indicatif mais non limitatif, en référence aux dessins annexés, sur lesquels :
- la figure 1 est une vue schématique partielle en coupe d'une partie de turbomachine ;
- la figure 2 est une vue agrandie d'une partie de la figure 1 ;
- la figure 3 est une vue schématique en perspective d'une aube de turbine faisant application de l'invention ;
- la figure 4 est une vue schématique à échelle agrandie de la partie d'extrémité interne de l'aube de la figure 3 ;
- la figure 5 est une vue schématique à échelle agrandie montrant la disposition côte à côte dans une roue mobile de turbine de deux parties d'extrémité internes d'aubes telles que celle de la figure 3 ;
- la figure 6 montre des courbes représentant la fréquence de résonance d'une aube telle que celle de la figure 3 et d'une aube monopale en fonction du régime de rotation ; et
- la figure 7 est une vue schématique à échelle agrandie de la partie d'extrémité interne d'une aube mobile selon un autre mode de réalisation de l'invention.

### Description détaillée de modes de réalisation

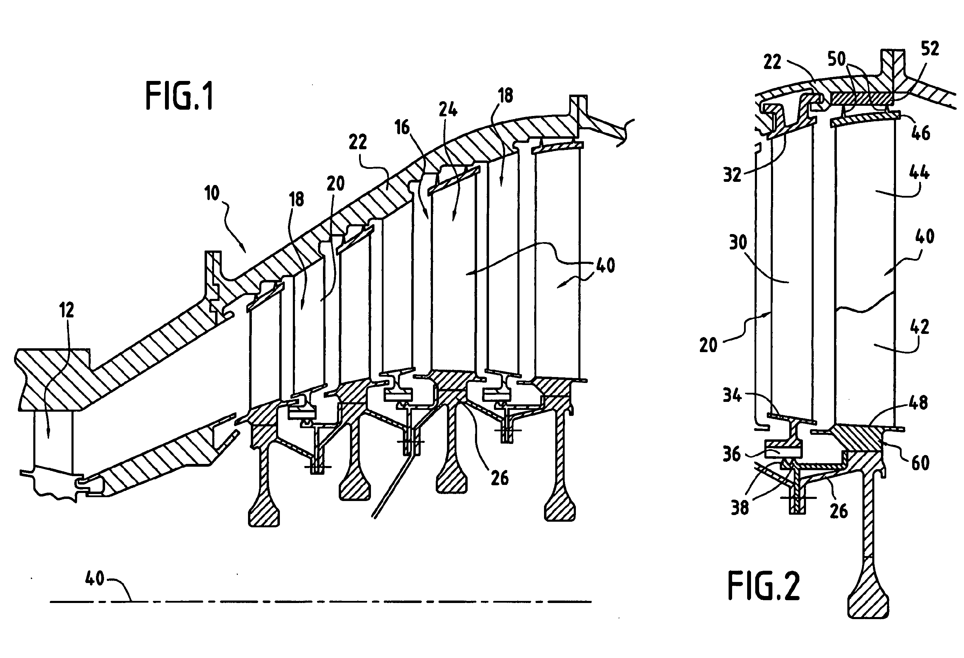

La figure 1 montre très schématiquement, en demi-coupe méridienne, une turbine de turbomachine, par exemple de turboréacteur d'avion.

De façon bien connue, la turbine 10 comprend une partie de turbine haute-pression (turbine HP) 12 couplée à un arbre (non représenté) d'entraînement en rotation d'un compresseur haute-pression (compresseur HP) également non représenté, et une partie de turbine basse-pression (turbine BP) 16. Cette dernière comprend plusieurs étages avec des ensembles 18 d'aubes fixes 20 solidaires d'un stator externe 22 et des roues 24 d'aubes mobiles 40 reliées à un rotor 26. Le rotor 26 est couplé à un arbre (non représenté) d'entraînement en rotation d'un compresseur basse-pression (compresseur BP) également non représenté.

Comme le montre plus nettement la figure 2, les aubes fixes 20 comprennent une pale 30, une plate-forme externe 32 par laquelle l'aube est reliée au stator 22 et une plate-forme interne 34. Cette dernière est munie d'un revêtement abradable 36 en regard de léchettes d'étancheité 38 portées par le rotor 26.

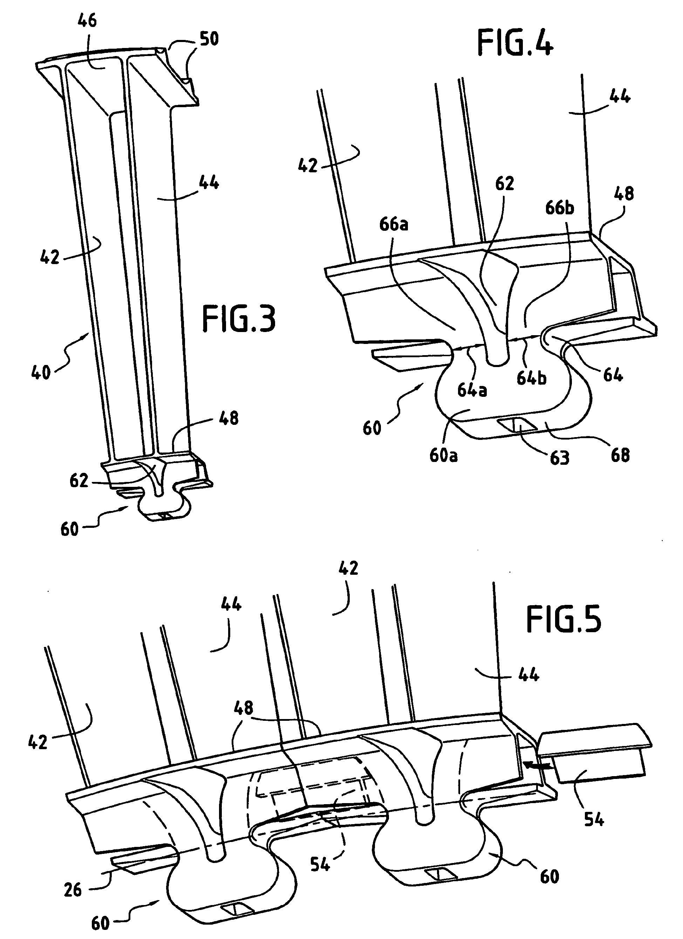

Selon une caractéristique de l'invention, les aubes mobiles 40 sont des aubes multipales. Dans l'exemple illustré par la figure 3, chaque aube mobile 40 comprend deux pales 42, 44. Les pales 42, 44 sont réunies à leurs extrémités à une plate-forme externe 46 et à une plate-forme interne 48 communes. Un pied 60, commun aux pales 42, 44 fait saillie du côté interne de la plate-forme 48 pour relier l'aube 40 au rotor 26.

Du côté externe, la plate-forme externe 46 présente des léchettes d'étanchéité 50 en regard d'un revêtement abradable 52 porté sur le stator 22 (figure 2).

Dans le mode de réalisation illustré, le pied 60 est un pied creux en forme de bulbe. Le pied 60 présente un évidement borgne 62 formé sur une partie de son épaisseur. Comme le montre la figure 4, l'évidement 62 s'ouvre sur un côté 60a du pied, en l'espèce sur le côté aval (dans le sens d'écoulement des gaz dans la turbine). L'évidement s'ouvre également à travers un orifice 63 à la base du pied 60. De la sorte, une circulation d'air peut être établie dans l'évidement 62, contribuant au refroidissement du pied et de la plate-forme interne de l'aube. Le pied creux peut être obtenu directement par fonderie de l'aube. L'évidement peut aussi être réalisé par usinage d'un pied plein.

La liaison entre l'aube 40 et le rotor 26 est réalisée par engagement du pied 60 dans un logement de forme correspondante formé à la périphérie d'un disque du rotor. Lorsque les aubes ont été assemblées au rotor pour former une roue complète, les faces externes des plates-formes internes 48 s'inscrivent dans la continuité de la surface interne de la veine dans laquelle s'étendent les pales 42, 44. Par rapport à une roue comportant un même nombre de pales, mais avec des aubes monopales, le nombre de jeux entre aubes voisines est divisé par deux. Cela permet d'améliorer les performances de la turbine par diminution des fuites entre plates-formes d'aubes. L'étanchéité au niveau de la jonction entre les plates-formes internes de deux aubes voisines peut être complétée par une pièce 54 formant déflecteur (figure 5). La pièce 54 est un secteur annulaire à profil en U inversé qui recouvre la jonction entre deux plates-formes internes adjacentes, en étant en contact avec les faces internes des parties d'extrémité de ces plates-formes, les ailes de la pièce 54 s'appuyant sur les flancs en regard des pieds 60 des deux aubes adjacentes.

En outre, la plate-forme externe 46 de l'aube 40 a une dimension circonférentielle supérieure à celle d'une plate-forme externe d'aube monopale. Cela permet de former une ou plusieurs léchettes d'étanchéité 50 qui s'étendent de façon continue sur une plus grande distance en direction circonférentielle, donc offre une possibilité d'amélioration de l'étanchéité entre le sommet des aubes mobiles 40 et le revêtement abradable situé en regard sur le stator 22.

Selon une caractéristique particulière de l'invention, l'ajustement de la fréquence de résonance propre d'une aube mobile 40 est réalisé par action sur la configuration du pied de l'aube.

Avec un pied 60 creux tel que celui de l'exemple de réalisation illustré par les figures 3 et 4, l'ajustement de la fréquence de résonance peut être réalisé en réglant l'épaisseur de matière au niveau du col 64, ou partie la plus rétrécie du pied, c'est-à-dire la somme des épaisseurs 64a et 64b (figure 4) de chaque côté de l'évidement. Le réglage d'épaisseur peut être effectué en jouant dans un sens ou dans l'autre sur la largeur de l'évidement 62 au niveau du col 64, ce qui n'influence pas les dimensions extérieures du pied 60. Les épaisseurs 64a et 64b ne sont pas nécessairement égales. Une latitude assez grande d'ajustement de la fréquence de résonance de l'aube est alors offerte sans affecter le comportement aérodynamique et l'encombrement de l'aube mobile.

On notera en outre que la réalisation d'un pied creux contribue à réduire la masse de l'aube mobile tout en offrant une possibilité de refroidissement par présence d'une cavité ouverte au voisinage de la plate-forme interne, et ce sans affecter la tenue mécanique. Dans l'exemple illustré, cette tenue mécanique, notamment la capacité à supporter les contraintes exercées sur l'aube mobile, est principalement fonction des épaisseurs de la plate-forme interne et des flancs 66a, 66b du pied 60, ainsi que de la base 68 du pied 60.

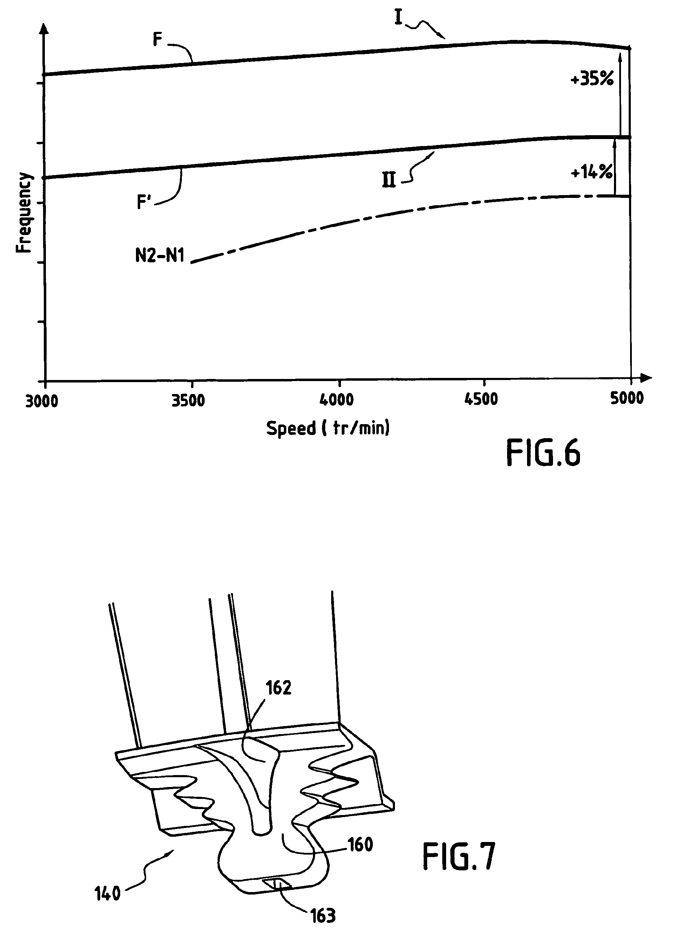

Sur la figure 6, la courbe I représente la fréquence de résonance propre F d'une aube mobile de turbine BP de turboréacteur aéronautique, telle que celle des figures 3 et 4, en fonction de la vitesse de rotation de la turbine BP. Cette fréquence F a pu être ajustée en réglant l'épaisseur de matière au niveau du col du pied creux. Sur la même figure, la courbe N₂ - N₁ représente le mode d'excitation principal aux plus basses fréquences, N₂ et N₁ étant respectivement les vitesses de rotation des turbines HP et BP.

A titre de comparaison, la courbe II représente la fréquence de résonance propre F' d'une aube mobile mono-pale existante ayant une pale de mêmes dimensions et forme que celle de chacune des deux pales de l'aube de fréquence de résonance égale à F, l'aube monopale et l'aube bipale étant destinées à former des roues de turbine de mêmes dimensions substituables l'une à l'autre.

On constate que la fréquence de résonance F' présente, au régime de rotation élevé, une valeur seulement 14 % plus élevée que celle correspondant au mode d'excitation N₂ - N₁. Or, il apparaît qu'une augmentation de la fréquence F' afin de plus l'éloigner du mode d'excitation N₂ - N₁ n'est pas en pratique possible sans affecter le comportement mécanique ou aérodynamique de l'aube monopale.

Par contre, par l'utilisation d'une aube bipale, il est possible en jouant sur la configuration du pied commun aux deux pales, d'ajuster la fréquence de résonance propre pour lui conférer une valeur suffisamment éloignée de celle du mode d'excitation N₂ - N₁ pour éviter un risque de vibrations indésirables, notamment une valeur supérieure de plus de 14 %, et de préférence d'au moins 20 % au mode N₂ - N₁. Ainsi, comme le montre la figure 6, la fréquence de résonance F obtenue avec l'aube bipale utilisée a pu être ajustée à une valeur supérieure de 35 % au mode d'excitation N₂-N₁, c'est-à-dire 21 % de plus par rapport à l'aube monopale.

En outre, selon une autre caractéristique de l'invention, la latitude offerte dans l'ajustement de la fréquence de résonance des aubes mobiles permet de régler cette fréquence à des valeurs sensiblement différentes pour des aubes appartenant à une même roue mobile et/ou pour des aubes appartenant à différentes roues mobiles constituant la turbine BP. Par valeurs sensiblement différentes, on entend ici des valeurs de fréquence de résonance qui sont différentes d'au moins 1%. Avantageusement, les différentes fréquences sont ajustées à des valeurs supérieures de plus de 14%, et de préférence d'au moins 20% au mode d'excitation basse fréquence N₂ - N₁, tel que défini plus haut.

Ainsi, dans au moins certaines des roues mobiles, et de préférence dans chacune des roues mobiles formant un étage de turbine BP, on pourra utiliser des aubes n'ayant pas toutes la même fréquence de résonance, afin de réaliser un désaccordage de la roue mobile. La variation de fréquence de résonance est réalisée en conférant des formes ou dimensions différentes aux évidements des pieds. Il est possible aussi, dans une même roue d'assembler des aubes à pied creux avec des aubes à pied plein, dépourvu d'évidement. Afin de limiter le nombre de pièces différentes, on pourra utiliser, pour une même roue, seulement quelques configurations différentes de pieds d'aubes. On évite ainsi l'apparition de vibrations simultanément pour toutes les aubes d'une roue.

On peut aussi conférer aux aubes d'une roue mobile une fréquence de résonance différente de celle des aubes d'une autre roue mobile afin de réaliser un désaccordage entre roues mobiles différentes. La variation de fréquence de résonance d'une roue à l'autre peut être obtenue en choisissant notamment les formes et/ou dimensions des évidements des pieds d'aubes. Il est possible aussi de réaliser certaines des roues mobiles avec des aubes ayant un pied plein, dépourvu d'évidement. On évite ainsi l'apparition de vibrations simultanément dans toutes les roues mobiles de la turbine.

Les deux possibilités ci-dessus peuvent être combinées, c'est-à-dire avec des roues mobiles qui sont au moins pour certaines désaccordées avec des ensembles de fréquences de résonance d'aubes différents entre roues différentes.

Différentes modifications pourront être apportées au mode de réalisation décrit plus haut sans sortir du cadre de l'invention.

Ainsi, selon un autre mode de réalisation illustré schématiquement par la figure 7, l'aube 140 se distingue de celle des figures 3 et 4 uniquement en ce que le pied 160 de l'aube 140 est en forme de sapin. L'ajustement de la fréquence peut être réalisé comme décrit plus haut en conférant une configuration particulière à un évidement 162, de préférence borgne, formé dans le pied 160. L'évidement 162 peut s'ouvrir par un orifice 163 à la base du pied 160.

Selon un autre mode de réalisation, l'aube mobile pourra comporter plus de deux pales réunies avec une plate-forme externe, une plate-forme interne et un pied communs.

Bien que l'on ait envisagé ci-avant le cas d'une turbine BP de turbomachine, l'invention peut s'appliquer aussi aux roues mobiles de turbines HP de turbomachines. L'invention peut en outre s'appliquer non seulement aux turbines aéronautiques, mais aussi aux turbines industrielles.

## Revendications

1. Procédé pour la réalisation d'une turbine pour turbomachine, la turbine comprenant au moins une roue mobile munie d'aubes, procédé selon lequel on utilise pour la ou chaque roue mobile des aubes (40 ; 140) comportant chacune au moins deux pales (42 ; 44) réunies à une plate-forme externe (46), une plate-forme interne (48) et un pied (60 ; 160) communs, **caractérisé en ce que** certaines au moins des aubes ont un pied creux dans lequel est formé un évidement, et l'on confère volontairement aux pieds d'aubes (60 ; 160) appartenant à une même roue et/ou aux pieds d'aubes (60 ; 160) appartenant à deux roues différentes des configurations différentes au niveau d'évidements de leurs pieds pour ajuster les fréquences de résonance propres de ces aubes à des valeurs sensiblement différentes et réaliser ainsi un désaccordage entre aubes d'une même roue et/ou de deux roues différentes.

2. Procédé selon la revendication 1, **caractérisé en ce que** l'on utilise des aubes dont certaines ont un pied plein dépourvu d'évidement.

3. Procédé d'ajustement de la fréquence de résonance d'une aube mobile de turbine pour turbomachine, **caractérisé en ce que** l'on réalise l'aube (40 ; 140) avec au moins deux pales réunies avec une plate-forme interne, une plate-forme externe et un pied (60 ; 160) communs et on ajuste la fréquence de résonance propre de l'aube en formant un évidement (62 ; 162) dans le pied de l'aube.

4. Procédé selon la revendication 3, **caractérisé en ce que** l'on réalise l'aube avec un pied (60) en forme de bulbe et on ajuste la fréquence de résonance par action sur l'épaisseur de matière, de part et d'autre de l'évidement, au niveau d'une partie du pied en forme de col (64).

5. Procédé selon l'une quelconque des revendications 3 et 4 pour l'ajustement de la fréquence de résonance d'une aube (40 ; 140) d'une turbine de turbomachine ayant une turbine haute-pression (HP) et une turbine basse-pression (BP), **caractérisé en ce que** la fréquence de résonance propre de l'aube est ajustée à une valeur supérieure de plus de 14% au mode d'excitation correspondant à N₂-N₁ où N₂ et N₁ sont les vitesses de rotation des turbines HP et BP.

6. Turbine étagée pour turbomachine, la turbine comprenant au moins une roue mobile munie d'aubes (40 ; 140) qui comportent chacune au moins deux pales (42 ; 44) réunies à une plate-forme externe (46), une plate-forme interne (48) et un pied communs (60 ; 160), **caractérisée en ce que** certaines au moins des aubes (60 ; 160) d'une roue mobile et/ou de roues mobiles différentes ont un pied creux dans lequel est formé un évidement et présentent des configurations différentes au niveau de leurs évidements telles que ces aubes ont des fréquences de résonance propres sensiblement différentes.

7. Turbine selon la revendication 6, **caractérisée en ce que** l'évidement (62 ; 162) s'ouvre sur un côté au moins du pied (60 ;160).

8. Turbine selon la revendication 7, **caractérisée en ce que** l'évidement (62 ; 162) est borgne, s'ouvrant sur un côté seulement du pied (60 ; 160).

9. Turbine selon l'une quelconque des revendications 6 à 8, **caractérisée en ce que** certaines des aubes ont un pied plein dépourvu d'évidement.

10. Turbine selon l'une quelconque des revendications 6 à 9 pour turbomachine ayant une turbine haute-pression (HP) et une turbine basse-pression (BP), **caractérisée en ce que** chaque aube mobile (40 ; 140) de la turbine a une fréquence propre de résonance supérieure de plus de 14% au mode d'excitation correspondant à N₂-N₁, où N₂ et N₁ sont les vitesses de rotation des turbines HP et BP.

## Claims

1. A method of making a turbomachine turbine, the turbine comprising at least one moving wheel provided with blade inserts, each of the inserts (40; 140) used for the or each moving wheel comprising at least two blades (42; 44) interconnected by common inner and outer platforms (46; 48) and sharing a common root (60; 160), **characterised in that** at least some of the inserts have a hollow root in which a recess is formed, and insert roots (60; 160) belonging to the same wheel and/or insert roots (60; 160) belonging to two different wheels are voluntarily given different configurations for the recesses in their roots so as to adjust the resonant frequencies of said blade inserts to values that are significantly different, thereby ensuring that the blade inserts of a single wheel and/or between two different wheels are out of tune.

2. A method according to claim 1, **characterised in that** blade inserts are used including at least some having a solid root without any recess.

3. A method of adjusting the resonant frequency of a moving blade insert for a turbomachine turbine, **characterised in that** the insert (40; 140) is made to have at least two blades interconnected by common inner and outer platforms and sharing a common root (60; 160), and the resonant frequency of the insert is adjusted by forming a recess (62; 162) in the insert root.

4. A method according to claim 3, **characterised in that** the insert is made with a root (60) in the form of a bulb, and its resonant frequency is adjusted by acting on the thickness of material on either side of the recess, level with a portion of the root that forms a neck (64).

5. A method according to claim 3 or claim 4 for adjusting the resonant frequency of a blade insert (40; 140) in a turbine of a turbomachine having a high-pressure turbine (HP) and a low-pressure turbine (LP), **characterised in that** the resonant frequency of the insert is adjusted to a value that is more than 14% greater than the excitation mode corresponding to N₂ - N₁ where N₂ and N₁ are the speeds of rotation of the HP and LP turbines.

6. A staged turbine for a turbomachine, the turbine comprising at least one moving wheel fitted with blade inserts (40; 140), each comprising at least two blades (42; 44), interconnected by common outer and inner platforms (46; 48) and sharing a common root (60; 160), **characterised in that** at least some of the inserts (40; 140) of the same moving wheel and/or of different moving wheels have hollow roots in which respective recesses are formed presenting configurations that differ so that the inserts have resonant frequencies that are significantly different.

7. A turbine according to claim 6, **characterised in that** the recess (62; 162) opens out into at least one side of the root (60; 160).

8. A turbine according to claim 7, **characterised in that** the recess (62; 162) is blind, opening out in one side only of the root (60; 160).

9. A turbine according to any one of claims 6 to 8, **characterised in that** some of the inserts have a root without any recess.

10. A turbine according to any one of claims 6 to 9 for a turbomachine having a high-pressure turbine (HP) and a low-pressure turbine (LP), **characterised in that** each moving blade insert (40; 140) of the turbine has a resonant frequency that is more than 14% greater than the excitation mode corresponding to N₂ - N₁, where N₂ and N₁ are the speeds of rotation of the HP and LP turbines.

## Patentansprüche

1. Verfahren zur Herstellung einer Turbine für eine Turbomaschine, wobei die Turbine wenigstens ein mit Schaufeln versehenes Laufrad aufweist, Verfahren, nach dem für das oder jedes Laufrad Schaufeln (40; 140) verwendet werden, die jeweils wenigstens zwei Blätter (42; 44) umfassen, die mit einer gemeinsamen Außenplattform (46), einer gemeinsamen Innenplattform (48) und einem gemeinsamen Fuß (60; 160) verbunden sind, **dadurch gekennzeichnet, daß** wenigstens einige der Schaufeln einen hohlen Fuß aufweisen, in dem eine Ausnehmung ausgebildet ist, und den Schaufelfüßen (60; 160), die zu einem gleichen Rad gehören und/oder den Schaufelfüßen (60; 160), die zu zwei verschiedenen Rädern gehören, im Bereich von Ausnehmungen ihrer Füße gezielt unterschiedliche Gestaltungen verliehen werden, um die Eigenresonanzfrequenzen dieser Schaufeln auf deutlich unterschiedliche Werte einzustellen und um auf diese Weise eine Verstimmung zwischen den Schaufeln eines gleichen Rades und/oder von zwei verschiedenen Rädern zu bewirken.

2. Verfahren nach Anspruch 1, **dadurch gekennzeichnet, daß** Schaufeln verwendet werden, von denen einige einen massiven Fuß ohne Ausnehmung haben.

3. Verfahren zum Einstellen der Resonanzfrequenz einer Turbinenlaufschaufel für eine Turbomaschine, **dadurch gekennzeichnet, daß** die Schaufel (40; 140) mit wenigstens zwei Blättern ausgebildet wird, die mit einer gemeinsamen Innenplattform, einer gemeinsamen Außenplattform und einem gemeinsamen Fuß (60; 160) verbunden sind, und die Eigenresonanzfrequenz der Schaufel durch Bildung einer Ausnehmung (62; 162) in dem Fuß der Schaufel eingestellt wird.

4. Verfahren nach Anspruch 3, **dadurch gekennzeichnet, daß** die Schaufel mit einem knollenförmigen Fuß (60) ausgebildet wird und die Resonanzfrequenz durch Einwirken auf die Materialdicke auf beiden Seiten der Ausnehmung, im Bereich eines halsförmigen Teils (64) des Fußes eingestellt wird.

5. Verfahren nach irgendeinem der Ansprüche 3 und 4 zur Einstellung der Resonanzfrequenz einer Schaufel (40; 140) einer Turbine einer Turbomaschine mit einer Hochdruckturbine (HD) und einer Niederdruckturbine (ND), **dadurch gekennzeichnet, daß** die Eigenresonanzfrequenz der Schaufel auf einen Wert eingestellt wird, der um mehr als 14 % über dem N₂-N₁ entsprechenden Erregungsmodus liegt, wobei N₂ und N₁ die Rotationsgeschwindigkeiten der HD- und der ND-Turbine sind.

6. Stufenturbine für eine Turbomaschine, wobei die Turbine wenigstens ein Laufrad umfaßt, das mit Schaufeln (40; 140) versehen ist, die jeweils wenigstens zwei Blätter (42; 44) aufweisen, die mit einer gemeinsamen Außenplattform (46), einer gemeinsamen Innenplattform (48) und einem gemeinsamen Fuß (60; 160) verbunden sind, **dadurch gekennzeichnet, daß** wenigstens einige der Schaufeln (40; 140) eines Laufrades und/oder von verschiedenen Laufrädern einen hohlen Fuß haben, in dem eine Ausnehmung ausgebildet ist, und im Bereich ihrer Ausnehmungen unterschiedliche Gestaltungen aufweisen, die derart sind, daß diese Schaufeln deutlich unterschiedliche Eigenresonanzfrequenzen haben.

7. Turbine nach Anspruch 6, **dadurch gekennzeichnet, daß** die Ausnehmung (62; 162) sich an wenigstens einer Seite des Fußes (60; 160) öffnet.

8. Turbine nach Anspruch 7, **dadurch gekennzeichnet, daß** die Ausnehmung (62; 162) eine Sackausnehmung ist, die sich an nur einer Seite des Fußes (60; 160) öffnet.

9. Turbine nach irgendeinem der Ansprüche 6 bis 8, **dadurch gekennzeichnet, daß** einige der Schaufeln einen massiven Fuß ohne Ausnehmung haben.

10. Turbine nach irgendeinem der Ansprüche 6 bis 9 für eine Turbomaschine mit einer Hochdruckturbine (HD) und einer Niederdruckturbine (ND), **dadurch gekennzeichnet, daß** jede Laufschaufel (40; 140) der Turbine eine Eigenresonanzfrequenz hat, die um mehr als 14 % über dem N₂-N₁ entsprechenden Erregungsmodus liegt, wobei N₂ und N₁ die Rotationsgeschwindigkeiten der HD- und der ND-Turbine sind.
